(19) Europäisches Patentamt
European Patent Office
Office européen des brevets

(11) **EP 2 698 644 B1**

(12) **EUROPEAN PATENT SPECIFICATION**

(45) Date of publication and mention
of the grant of the patent:
**30.03.2016 Bulletin 2016/13**

(51) Int Cl.:
***G01S 5/14*** *(2006.01)*   ***G01S 19/38*** *(2010.01)*

(21) Application number: **13192972.1**

(22) Date of filing: **12.01.2005**

(54) **Methods and systems for enhanced navigational performance**

Verfahren und Systeme für Erweiterte Navigationsleistungsfähigkeit

Procedes et systemes destines a des performances de navigation ameliorees

(84) Designated Contracting States:
**AT BE BG CH CY CZ DE DK EE ES FI FR GB GR
HU IE IS IT LI LT LU MC NL PL PT RO SE SI SK TR**

(30) Priority: **15.01.2004 US 536788 P
15.01.2004 US 536823 P
22.06.2004 US 873581
29.06.2004 US 879256**

(43) Date of publication of application:
**19.02.2014 Bulletin 2014/08**

(62) Document number(s) of the earlier application(s) in
accordance with Art. 76 EPC:
**05749774.5 / 1 706 756**

(73) Proprietor: **The Boeing Company
Chicago, IL 60606 (US)**

(72) Inventors:
• **Whelan, David A.**
**Newport Coast, CA 92657 (US)**
• **Cohen, Clark E.**
**Washington DC, DC 20003 (US)**
• **Gutt, Greg M.**
**Ashburn, VA 20148 (US)**
• **Ferrell, Barton G.**
**Troy, IL 62294 (US)**

(74) Representative: **Boult Wade Tennant
Verulam Gardens
70 Gray's Inn Road
London WC1X 8BT (GB)**

(56) References cited:
US-A- 6 107 959     US-A- 6 167 347
US-B1- 6 373 432

**Description**

**FIELD OF THE INVENTION**

This invention relates generally to methods and systems for navigation.

**BACKGROUND OF THE INVENTION**

GPS, or Global Positioning System, is funded by and controlled by the U. S. Department of Defense (DOD). While there are many thousands of civil users of GPS worldwide, the system was designed for and is operated by the U. S. military. GPS provides specially coded satellite signals that can be processed in a GPS receiver, enabling the receiver to compute position, velocity, and time. Four GPS satellite signals are used to compute positions in three dimensions and the time offset in the receiver clock. The GPS satellite is one of a constellation of approximately twenty-four GPS satellites operated by United States Department of Defense orbiting the Earth approximately twice every twenty-four hours at an altitude of approximately ten thousand miles and traversing the sky above a location on the surface of the Earth in approximately four hours.

Another satellite-based system called Global Orbiting NAvigational SyStem (GLONASS) is being developed and deployed by Russia. The basic goals, functions, and capabilities of the GLONASS are similar to the GPS. Although the present discussion focuses on a GPS-based system, a GLONASS-based system can be used for a similar function with a similar result.

GPS receivers normally determine their position by computing relative times of arrival of signals transmitted simultaneously from a multiplicity of GPS (or NAVSTAR) satellites. These satellites transmit, as part of their message, both satellite positioning data as well as data on clock timing, so-called "ephemeris" data.

The GPS satellites transmit two microwave carrier signals. The L1 frequency (1575.42 MHz) carries the navigation message and the Satellite Positioning Service (SPS) code signals. The L2 frequency (1227.60 MHz) is used to measure the ionospheric delay by Precise Positioning System (PPS) equipped receivers. There are two principal functions of GPS receiving systems: (1) computation of the pseudoranges to the various GPS satellites, and (2) computation of the position of the receiving platform using these pseudoranges and satellite timing and ephemeris data. The pseudoranges are simply the time delays measured between the received signal from each satellite and a local clock. The satellite ephemeris and timing data is extracted from the GPS signal once it is acquired and tracked.

Virtually all known GPS receivers utilize correlation methods to compute pseudoranges. These correlation methods are performed in real time, often with hardware correlators. GPS signals contain high rate repetitive signals called pseudorandom (PN) sequences. The codes available for civilian applications are called C/A codes, and have a binary phase-reversal rate, or "chipping" rate, of 1.023 MHz and a repetition period of 1023 chips for a code period of 1 msec. The code sequences belong to a family known as Gold codes. Each GPS satellite broadcasts a signal with a unique Gold code.

For a signal received from a given GPS satellite, following a downconversion process to baseband, a correlation receiver multiplies the received signal by a stored replica of the appropriate Gold code contained within its local memory, and then integrates, or lowpass filters, the product in order to obtain an indication of the presence of the signal. This process is termed a "correlation" operation. By sequentially adjusting the relative timing of this stored replica relative to the received signal, and observing the correlation output, the receiver can determine the time delay between the received signal and a local clock. The initial determination of the presence of such an output is termed "acquisition." Once acquisition occurs, the process enters the "tracking" phase in which the timing of the local reference is adjusted in small amounts in order to maintain a high correlation output. The correlation output during the tracking phase may be viewed as the GPS signal with the pseudorandom code removed, or, in common terminology, "despread." This signal is narrow band, with bandwidth commensurate with a 50 bit per second binary phase shift keyed data signal which is superimposed on the GPS waveform. The correlation acquisition process is very time consuming, especially if received signals are weak. To improve acquisition time, newer military GPS receivers are likely to utilize a multiplicity of correlators that allows a parallel search for correlation peaks.

The ability to track low power GPS signals is important for a number of real-time applications, including cases where the GPS signal may be attenuated, jammed, or subject to interference. Previous approaches to these obstacles have included to varying degrees (i) signal processing to enhance sensitivity, (ii) controlled radiation pattern antennas (CRPAs) to thwart jamming, and (iii) control of the receiving environment, if possible, to ward off interference. Unfortunately, in many of these cases, only limited performance improvement is feasible due to practical constraints.

In the case of (i) signal processing, the fundamental limit to increased performance is established by the data bit boundaries in the GPS message. The intrinsic GPS data broadcast rate is 50 bits per second. Ordinary receivers cannot integrate the signal across these 20ms intervals. Extension of the integration interval would actually lead to a *decrease* in performance because the data bits will appear as random noise that averages to zero. Therefore, a general practical limit is 20ms averaging.

Some practitioners have tried to push this limit by squaring the GPS signal. However, squaring is an inefficient means of recovering information because the noise is mixed with itself, resulting with a significant baseband noise component superimposed over the squared signal at baseband. Other techniques have been devised that employ data stripping-the local application of limited a priori knowledge of the GPS bit sequence that takes advantage of a tendency in GPS to often repeat the same sequence multiple times-in order to remove the GPS data and obtain longer integration times. Unfortunately, this technique can often provide marginal results-especially in critical applications. The main shortcoming is that it completely falls apart when the GPS message changes, and this occurrence is frequent and unpredictable.

Prior processing efforts have also taught away from the current invention of employing feed-forward data to enhance performance. For example, U.S. Patent No. 6,133,874 teaches that, "Coherent integration beyond 20 milliseconds is normally inadvisable since the presence of a priori unknown 50 baud binary phase shift keyed data (the satellite data message) placed on top of the signal does not allow coherent processing gain beyond one data bit period, or 20 milliseconds." Similarly, U.S. Patent No. 5,664,734 explains, "If the carrier frequency and all data rates were known to great precision, and no data were present, then the signal-to-noise ratio could be greatly improved, and the data greatly reduced, by adding to one another successive frames.... The presence of 50 baud data superimposed on the GPS signal still limits the coherent summation of PN frames beyond a period of 20 msec."

Null steering antennas (ii) reduce jamming by identifying the direction of origin of a jammer, then spatially notching out all signals in that direction. What remains is the unjammed GPS signals that come from other directions. With additional phased array electronics, it is also possible to create more tightly focused beams on individual GPS satellites, thereby increasing signal strength. While the jamming protection of CRPAs is excellent, such antennas are often heavy, bulky, and expensive.

In addition, controlling the receiving environment to minimize interference sources (iii) is often involved because it must be carried out under a regulatory regime. For example, ultrawideband (UWB) devices have already been shown to interfere with certain GPS devices on occasion. There is a general desire to have both of these devices coexist-the potential user base is fundamentally the same. In the best of all worlds, a regulatory environment will exist that will enable UWB to coexist with GPS and other incumbent bands. However, in spite of best efforts to create and conform to such a regulatory environment, there will always be deviations that create exceptions to proper performance. It is for these cases that the invention described herein is likely to be most useful, namely, as a "safety net" against unexpected interference.

In many instances, GPS may not be available to a navigation user. In hostile conditions, GPS may be jammed or otherwise defeated. In indoor application, GPS has insufficient power to penetrate the walls of buildings.

GPS now provides at least four ranging sources simultaneously which enables instantaneous, three-dimensional positioning. However, GPS has a low-power signal that limits operations indoors or in conditions of heavy jamming. A fundamental advantage of the system described herein is that it simultaneously addresses the limitations of its predecessors, providing a dynamic, three-dimensional, accurate position fixes-even indoors or in the presence of jamming.

The Low Earth Orbiting (LEO) satellite constellations, such as Iridium, have been suggested as offering a precise user time standard allowing navigation without using GPS. Patents have been granted for using the time standard from the LEO satellites for augmenting the functionality of the GPS system include such patents as United States Patent RE 37,256, issued to Cohen, et al. entitled, "System and Method For Generating Precise Position Determinations;" United States Patent 5,812,961 issued to Enge, et al. entitled, "Method And Receiver Using A Low Earth Orbiting Satellite Signal To Augment The Global Positioning System;" United States Patent 5,944,770 issued to Enge, et al. entitled, "Method And Receiver Using A Low Earth Orbiting Satellite Signal To Augment The Global Positioning System;" and United States Patent 6,373,432 issued to Rabinowitz, et al. entitled "System Using LEO Satellites For Centimeter-Level Navigation. These patents still rely, in large part, upon the GPS system.

The performance of MEMS technology is evolving rapidly and can often be optimized for various applications. MEMS technology has been applied to tuning forks in order to produce accelerometer that resolve acceleration to an extent to allow some navigational use. Inertial-grade mechanical inertial units can also provide a means for inertial navigation. In some applications alternating between GPS navigation and inertial navigation has been used for navigation where GPS access is intermittent. Such systems rely upon the presence of GPS to initially fix a position for subsequent inertial navigation.

What is needed is a low-cost, accessible means for precise navigation that operates independently of GPS. What is also needed is a system that provides robust GPS performance under any of these adverse conditions with a simple solution that does not incur the associated penalties in terms of size, weight, power, and cost.

## SUMMARY OF THE INVENTION

Methods and systems for enhanced navigational performance are disclosed.

An embodiment of the present invention comprises a system for leveraging the relative strengths of at least two navigation systems, an inertial navigation system and a LEO satellite navigation system. The inertial navigation system is used to ameliorate the integration load on the LEO satellite navigation processing system and the inertial system provides a good approximation of the changing position of the user device where jamming or an indoor environment blocks the use of the LEO satellite navigation. In turn, the LEO satellite navigation system will provide a precise position location to refine the inertial position fix wherever a precise position is available.

A presently preferred embodiment includes the ability to further fix a position with an signal input from a ground-based reference station. The ground-based reference station is advantageously positioned to receive signals from the LEO satellite through a portion of the earth atmosphere that is similar in propagation properties to the portion of earth atmosphere through which the signal received at the user device has passed to reach the user device.

In accordance with still further aspects of the invention, a position derived by a GPS positioning system can be used to refine the positional fix used for both the LEO-based satellite navigation system and the inertial positioning system. Additionally, a positioning of the user device at a precisely known position will appropriately refine the inertial position fix as well as the LEO satellite-derived position.

It will be readily appreciated that embodiments of the invention provide a method for estimating a precise position of a user device from signals from a low earth orbit (LEO) satellite and includes receiving at least one carrier signal at a user device, each carrier signal being transmitted a distinct LEO satellite. The user device processes the carrier signals to obtain a first carrier phase information. The user device recalls an inertial position fix derived at an inertial reference unit. The user device derives a position of the user device based on the inertial position fix and the first carrier phase information.

## BRIEF DESCRIPTION OF THE DRAWINGS

Examples and embodiments of the present invention are described in detail below with reference to the following drawings.

FIGURE 1 is a representative view of an aircraft equipped with a GPS receiver and subject to interference;
FIGURE 2 is an illustration of the timing of real-time and feed-forward GPS signals received by a user;
FIGURE 3 is a representative view of an example system;
FIGURE 4 is a block diagram of a LEO and GPS receiver;
FIGURE 5 is a block diagram of a preferred GPS or LEO receiver;
FIGURE 6 is a block diagram of the preferred signal processing for a GPS half channel;
FIGURE 7 is a block diagram for a GPS receiver for processing a single channel;
FIGURE 8 is a block diagram of a GPS carrier tracking loop estimator model;
FIGURE 9a is a block diagram of an inertial navigation processor;
FIGURE 9b is a block diagram of a preferred inertial navigational processor;
FIGURE 10 is a flow diagram of an example positioning method;
FIGURE 11 is a flow diagram of an example positioning method;
FIGURE 12 is a block diagram of an indoor positioning system using LEO satellites;
FIGURE 13 is a diagram of a differential positioning system using LEO satellites;
FIGURE 14a is a graphic representation of a system covariance from LEO and MEMS sources after a first pass;
FIGURE 14b is a graphic representation of a system covariance from LEO and MEMS sources after subsequent passes;
FIGURE 15 is a block diagram of a tightly coupled LEO inertial integrator; and
FIGURE 16 is a flowchart to describe a process for deriving a position based upon a LEO signal and an inertial position fix.

## DETAILED DESCRIPTION OF THE INVENTION

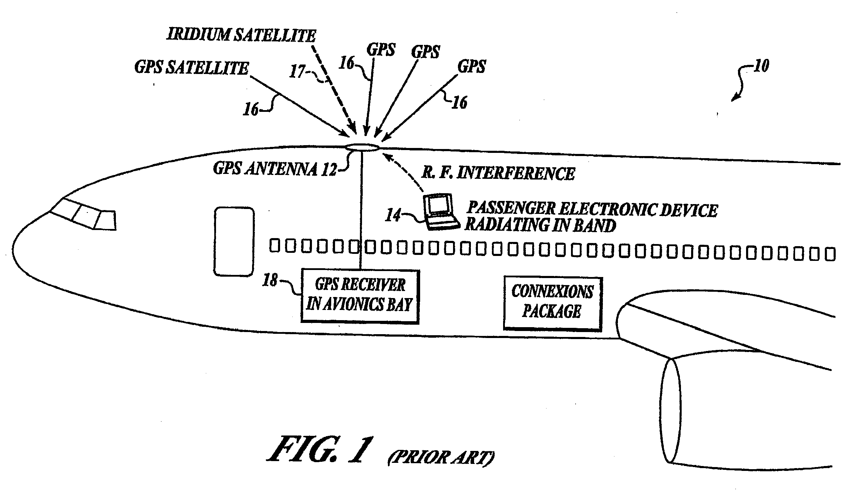

The present invention relates to methods and systems for enhanced navigational systems, including satellite navigational systems. Many specific details of certain examples and embodiments of the invention are set forth in the following description and in FIGURES 1 through 16 to provide a thorough understanding of such embodiments. One skilled in the art, however, will understand that the present invention may have additional embodiments, or that the present invention may be practiced without several of the details described in the following description.

FIGURE 1 shows an example 10 of interference generated within a commercial passenger jet 10 equipped with a GPS antenna 12 and GPS receiver 13. The GPS antenna 12 is capable of receiving GPS signals 16 and LEO satellite signals 17 from those satellites within its field of view.

If a passenger operates a portable electronic device 14 such as a notebook computer, it is possible that this device 14 could emit interference 15 in the GPS band. Through a number of pathways, this interference 15 can reach the GPS antenna 12 on board the aircraft that is being used for navigation. Depending on its strength, the interference 15 could render the GPS receiver useless, possibly jeopardizing the aircraft and its occupants.

Three binary codes shift the L1 or L2 carrier phase. The C/A Code (Coarse Acquisition) modulates the L1 carrier phase. The C/A code is a repeating 1 MHz Pseudo Random Noise (PRN) Code. This code modulates the L1 carrier signal, spreading the spectrum over a 1 MHz bandwidth. The C/A code repeats every 1023 bits (one millisecond). Each satellite has a different PRN C/A code, and GPS satellites are often identified by their PRN number, the unique identifier for each pseudo-random-noise code. The C/A code that modulates the L1 carrier is the basis for the civil SPS.

Authorized users with cryptographic equipment and keys and specially equipped receivers use the Precise Positioning System, or PPS. Authorized users include U. S. and allied military, certain U. S. Government agencies, and selected civil users specifically approved by the U. S. Government. In the PPS, the P-Code (Precise) modulates both the L1 and L2 carrier phases. The P-Code is a very long (seven days) 10 MHz PRN code. In the Anti-Spoofing (AS) mode of operation, the P-Code is encrypted into the Y-Code. The encrypted Y-Code requires a classified AS Module for each receiver channel and is for use only by authorized users with cryptographic keys. The P/Y Code is the basis for the PPS.

A Navigation Message also modulates the L1-C/A code signal. The Navigation Message is a 50 Hz signal consisting of data bits that describe the GPS satellite orbits, clock corrections, and other system parameters. The GPS Navigation Message consists of time-tagged data bits marking the time of transmission of each subframe at the time they are transmitted by the SV. A data bit frame consists of 1500 bits divided into five 300-bit subframes. A data frame is transmitted every thirty seconds. Three six-second subframes contain orbital and clock data. Satellite Vehicle (SV) Clock corrections are sent in subframe one and precise satellite orbital data sets (ephemeris data parameters) for the transmitting SV are sent in subframes two and three. Subframes four and five are used to transmit different pages of system data. An entire set of twenty-five frames (125 subframes) makes up the complete Navigation Message that is sent over a 12.5 minute period.

Ephemeris data parameters describe SV orbits for short sections of the satellite orbits. Normally, a receiver gathers new ephemeris data each hour, but can use old data for up to four hours without much error. The ephemeris parameters are used with an algorithm that computes the SV position for any time within the period of the orbit described by the ephemeris parameter set.

The C/A code is broadcast at 1,575.42 MHz in a 2.046 MHz wide band (complete null to null), and is used for civilian operations and for initial acquisition in military operations. The P/Y code is a wider-band signal spanning 20.46 MHz that provides 10 times higher ranging precision than C/A code commensurate with its higher chipping rate. Often, C/A code is the first casualty of jamming. The 1.023 MHz chipping rate of the C/A code provides some protection, but the 10.23 MHz chipping rate of the P/Y code offers an additional 10 dB of J/S protection. If the jamming is known to be narrow band and to originate within the C/A code frequency band so as to deny enemy use of the C/A code signal component, then even more protection is generally derived by notch filtering the center 2 MHz of the P/Y code input to the receiver.

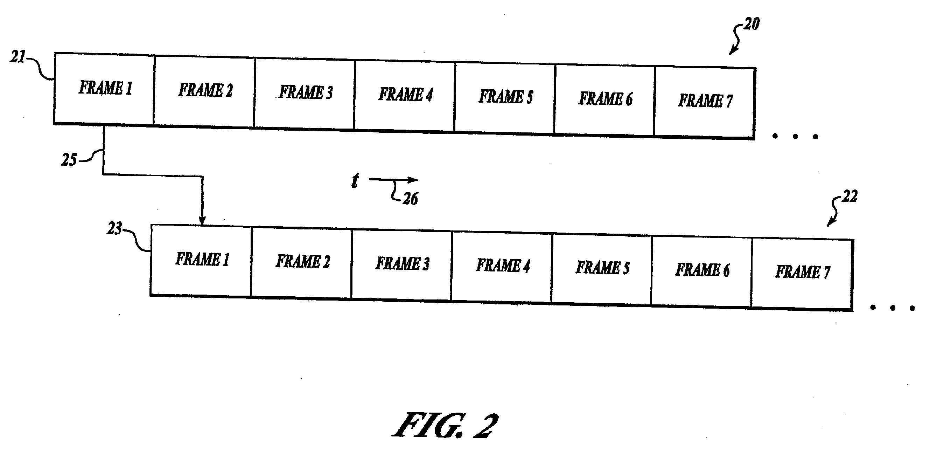

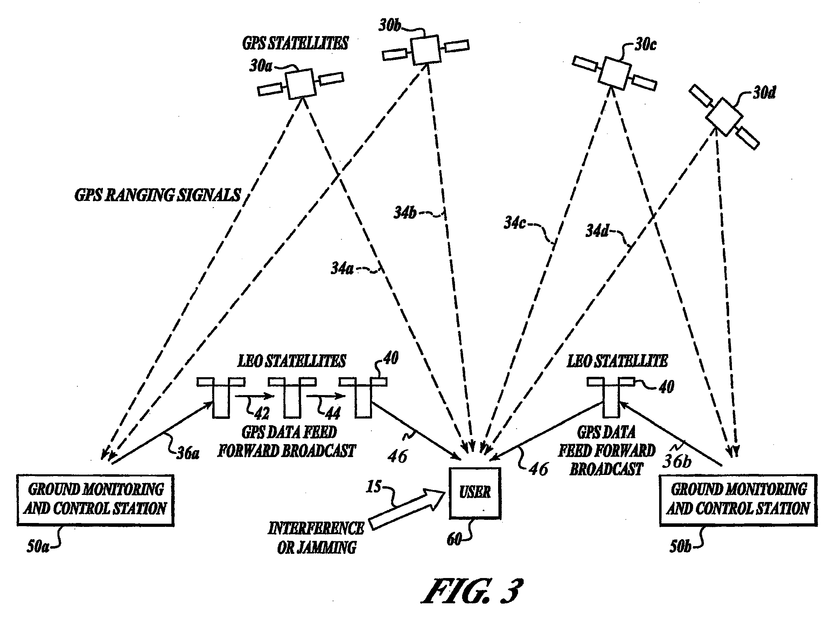

Referring to FIGURES 2 and 3, FIGURE 2 conceptually illustrates a 50 bps data stream 80 from a first GPS satellite 30a (see FIGURE 3), received in real time at a user 60 (see FIGURE 3). The entire GPS navigation message from either a real time data stream 20 or a relayed feed forward data stream 22 is 25 frames in length, with each frame of the GPS message further divided into 5 subframes that are six seconds, or 300 bits, in length. The feed forward data stream 22 from the same GPS satellite 30a contains the identical data, but because of propagation delays through the Iridium system the feed forward stream 22 arrives at the user 60 later than the real time stream 20. As indicated in FIGURE 2, the feed forward stream 22 is delayed for a period 26 by a fraction of a single frame such that a frame 21 containing Frame 1 data bears a temporal relation to a frame 23 bearing that same Frame 1 data expressed as a delay period 26. The actual period 26 of the delay will vary, depending on user location with respect to the GPS satellite and ground station. As part of the present example, the feed forward data 22 is then retrieved from the Iridium data stream and time-aligned with the GPS real time data 20 such that it can be used to enhance the real-time data.

FIGURE 3 shows an example system architecture. Reference GPS receivers 50a, b are placed on the Earth away from the region of degraded GPS signal conditions of interference, jamming, and attenuation. In a single application, only one or a plurality of such receivers 50a, b may be employed. These reference GPS reference receivers track the 50bps GPS ranging signal data stream 34a, 34b, 34c, and 34d for each satellite in view 30a, 30b, 30c, and 30d respectively.

In one example, an Iridium ground transmitter 50a, receives real time data streams from each satellite in view 30a, 30b, 30c, and 30d respectively, and telemeters a signal 34a, in this case, containing this received GPS feed forward data stream 20 in real time into the Iridium system via the nearest satellite 40. It is not necessary that the ground transmitter be in close proximity as its sole purpose is to place the real time data stream 20 onto the constellation of Iridium satellites, though the relevant satellites will only be those commonly visible to both ground monitoring station 50a, 50b and the user 60.

A Iridium satellite 40 is one of a constellation of low earth orbit satellites orbiting the Earth at an altitude of a few hundred miles, traversing the sky in about ten minutes. (Throughout this application, Iridium satellites are used as an exemplar of a LEO satellite 17 for purposes of enablement, though there is nothing unique to Iridium that necessarily limits the invention to Iridium satellites. Any LEO satellite with an appropriate data broadcast is suitable for the invention, and therefore this invention is not limited to Iridium satellites.)

The bit stream signals 36a, 36b are encoded into an Iridium broadcast channel. This broadcast message is promulgated throughout the Iridium network via its crosslinks 42, 44. Iridium broadcasts the 50bps real time data stream for each GPS satellite from each satellite in the Iridium constellation, as indicated in FIGURE 3 by a broadcast signal 46 being transmitted from an ultimate Iridium LEO satellite 40. A user receiver 60 in a degraded environment with interference, jamming, or attenuation then has access to these GPS data bits. The user receiver may then apply these GPS data bits to augment the signal processing of its own real time GPS measurements.

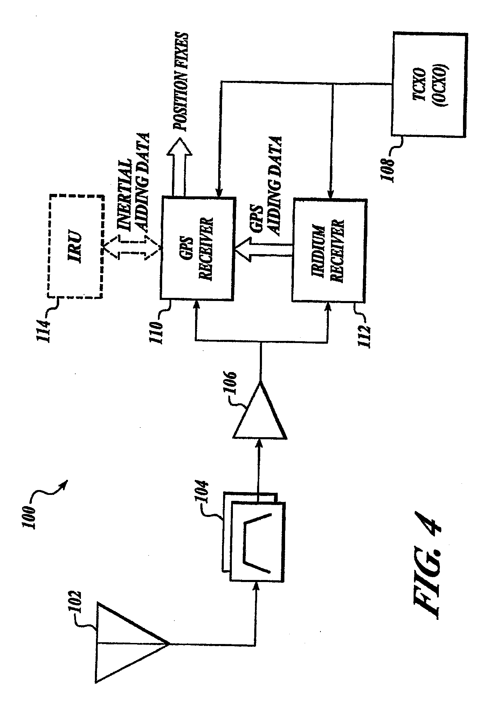

FIGURE 4 shows an example receiver 100 that receives and demodulates both GPS and Iridium satellite signals. Note that the example should not be limited to Iridium or any other particular satellite systems. Rather, the system will work equally well by using a receiver for any other satellite system in which GPS data can be retransmitted and fed forward to a user.

The receiver 100 includes a dual band antenna 102, band pass filter 104, and preamp 106. The filter and preamp permit both the L1 and L2 GPS signals to pass along with the Iridium signal, which is close to the L1 signal frequency (1575 +/- 10.23MHz for GPS; 1621 +/- 5MHz for Iridium). The filtered and amplified signal is passed to a GPS receiver 110 and an Iridium (or other LEO) receiver 112. The Iridium and GPS receivers are tied together with a common clock 108, which is preferably a temperature compensated crystal oscillator.

The GPS receiver 100 produces position fixes as an output, in a manner as discussed above. The GPS receiver also uses GPS aiding data forwarded to it from the Iridium receiver 112 in order to assist in resolving attenuated or missing data at the GPS receiver under interference or jamming conditions. Optionally, the receiver also includes an inertial unit (IRU) 114 in communication with the GPS receiver. The IRU 114 provides inertial motion information to the GPS receiver 110 to enable the GPS receiver 110 to provide accurate and updated position fixes during times of limited data or no data from satellites. Depending on the quality of the IRU, the position fixes from the GPS receiver may continue to be accurate for fairly long periods of time without GPS data following an initial accurate position fix.

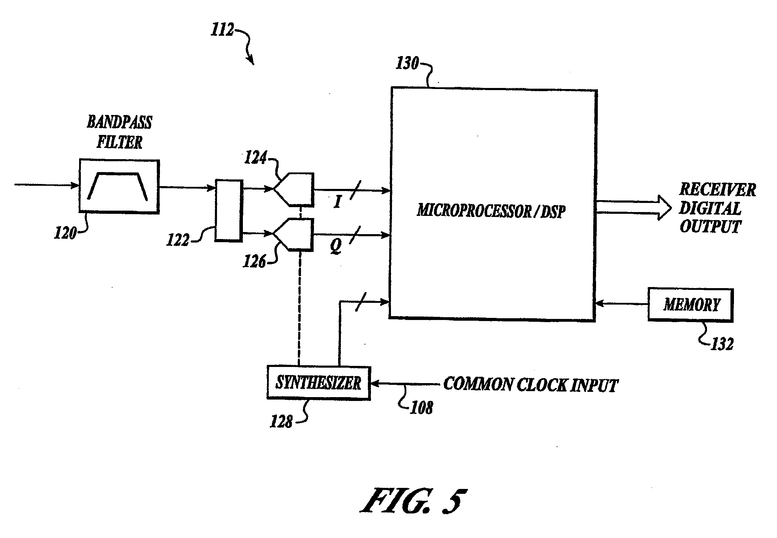

In the example, the satellite signals can be demodulated with a software receiver as shown in FIGURE 5. Alternatively, existing Iridium receivers can be obtained and used for this purpose. Nonetheless, the preferred form of this example employs software for much of the Iridium receiver 112 so as to make it both low cost and easy to maintain and upgrade.

The front end of the receiver 112 includes a bandpass filter 120. In the present example, the bandpass filter 120 has a 10 MHz passband at 1,621 MHz with a steep cutoff, therefore requiring it to be a high Q filter. New technologies allow sharp filtering to be done at this frequency. The sharp filtering rejects out-of-band interference, such as nearby cellular telephones. An example of the electrical components suitable for this purpose is the specialized RF chip pair contained in IBM GPS receiver IBM43GAENGP0001. This receiver contains an integrated SiGe chip that carries out the bandpass, automatic gains control (AGC), and direct RF sampling functions using 2-bit quantization. Schematically, these functions are illustrated in FIGURE 5 as the signal travels from the bandpass filter 120, then is separated into inphase and quadrature components via the hybrid coupler 122. The component signals are passed to inphase and quadrature A/D converters 124, 126. One example downconverts the signal by 46 MHz to the Iridium band. However, it is not critical that direct downconversion be used. It is also possible to employ a traditional quadrature downconversion scheme.

The A/D converters 124, 126 sample the incoming inphase and quadrature signals at 40 MHz. The output is fed directly into a digital signal processor (DSP) 130 (preferably a TMS 320 DSP) which can then process sections of the data to lock onto the Iridium signal, calculate signal phasing and phase rate, and extract the broadcast bits containing the GPS data fed forward by the Iridium satellite. The GPS data bits from the Iridium broadcast message are demodulated in accordance with the Iridium specification. A memory 132 is also provided to store data and computer programming instructions for processing by the DSP 130. The memory 132 may take any of a variety of forms, such as EEPROM chips or other electromagnetic or optical storage devices.

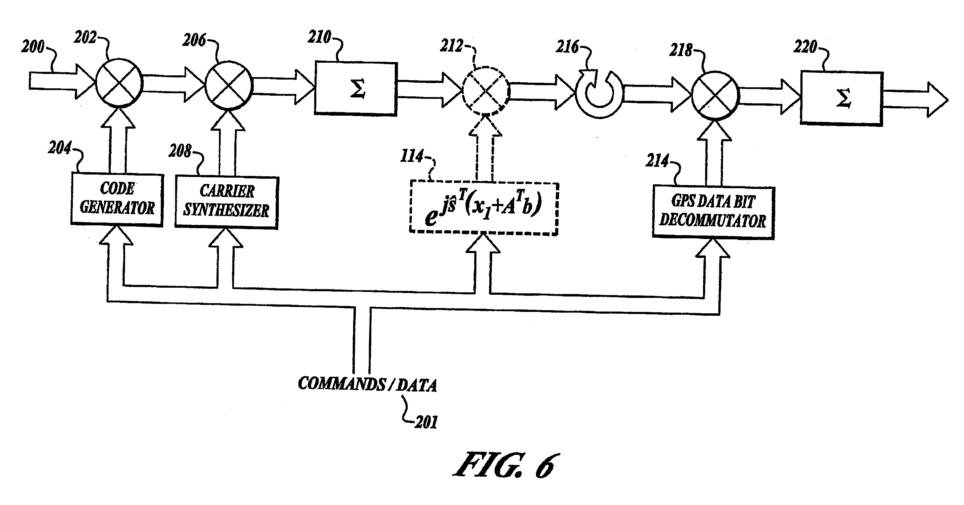

FIGURE 6 shows how the GPS tracking is implemented for a half channel. The raw, real time digital GPS data measurements 200 are input and mixed at a first mixer 202 with a specific version of the GPS Code provided by a code generator 204, operating on feed forward data 201 obtained from the Iridium satellite. Two identical half channels make up a full channel, as will be described in greater detail below.

The output of the code mixer is mixed again at a second mixer 206 with an internally synthesized version of the GPS carrier generated by the carrier tracking loop of the receiver at a synthesizer 208. An accumulator 210 builds up one-millisecond samples of the incoming channel whose boundaries align with the received signal epoch. This integration boundary is chosen to be general enough to handle short overall integration times, such as one millisecond, but to also accommodate longer integration times. According to the GPS signal specification [ICD-200], data bit boundaries will also occur on 20ms boundaries aligned with the received signal epochs. Therefore, the one-millisecond epoch boundary can never cut across a data bit.

For dynamic applications, a MEMS Inertial Reference Unit (IRU) 114 is coupled to the system at a third mixer 212. The inertial reference unit 114 is shown in dotted lines may be included where the dictates of the application make the IRU additionally useful. In more demanding applications, an inertial-grade IRU may be desirable. The IRU senses inertial vector translation, $x_l$, and attitude motion, represented by the 3 x 3 attitude rotation matrix $A$, of the user platform. With prior knowledge of the antenna mounting lever arm, $b$, with respect to the body frame of the user platform, it is possible to use the inertial to project the antenna motion into the line of sight of the satellite, $\hat{s}$, to yield a complex, real-time phase correction for each channel. The net effect is to subtract out short-term user motion and enable long integration times on the GPS signal.

The Iridium receiver (not shown) demodulates the feedforward GPS data bits for all the GPS satellites in view via the Iridium system. A decommutator 214 in the user receiver sorts out the incoming bit stream within the Iridium data frame and temporally positions the reference GPS bits in proper phasing for each channel. To keep track of delays, the GPS data is time tagged according to the GPS time at which it was broadcast from the GPS satellite. In general, these GPS data bits are subject to a latency of around 80ms as they propagate through space from the GPS satellite to the ground reference receiver. An additional latency of order 10-90ms from the time they are received at the ground reference station will accrue from transmission to the user from the ground station due to propagation delay through the Iridium system.

To ensure that the real-time GPS data bits are appropriately delayed and aligned in time with the decommutated feedforward data bits produced at a decommutator 214, a first-in-first-out (FIFO) synchronization buffer 216 is employed, receiving and buffering data from the accumulator (optionally mixed with the IRU data). The GPS time tags on each data stream are used to ensure that the same millisecond epochs of data are mixed together. The FIFO 216 holds each batch of millisecond measurements from the accumulators until they are exactly time aligned with the incoming data bits from Iridium. Then, the Iridium data bit stream is used to wipe off the 50 bps data modulation from the incoming GPS signal at a fourth mixer 218. The result is a true coherent GPS carrier phase detector, at accumulataor 220, extendible from 1ms to longer integration times that are limited by the quality of the inertial unit-potentially well beyond 20 seconds for an inertial grade unit.

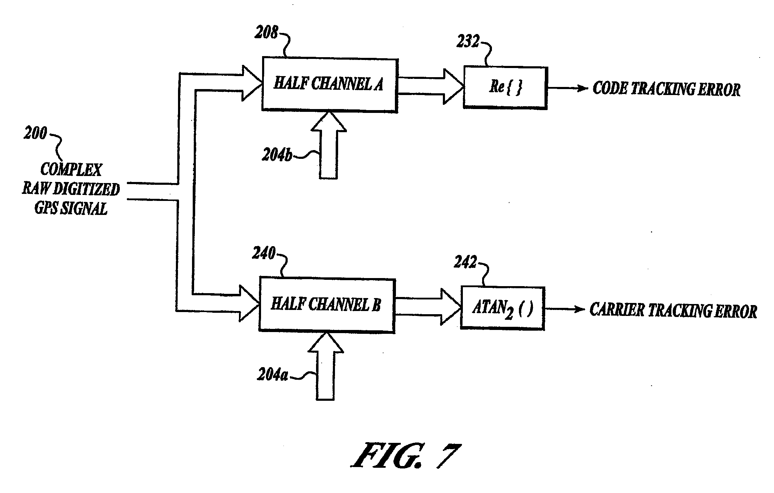

Each channel is formed by two half channels. As shown in FIGURE 7, the output for each half channel may be interpreted as follows: if the half channel code generator is commanded to synthesize an early minus late code sequence 204b, then the real component 232 of the output of that half channel 230 will correspond to the code phase tracking error for that satellite. If the half channel code generator is commanded to synthesize a punctual code sequence 204b, then the output 242 of that half channel 240 will correspond to the carrier phase error.

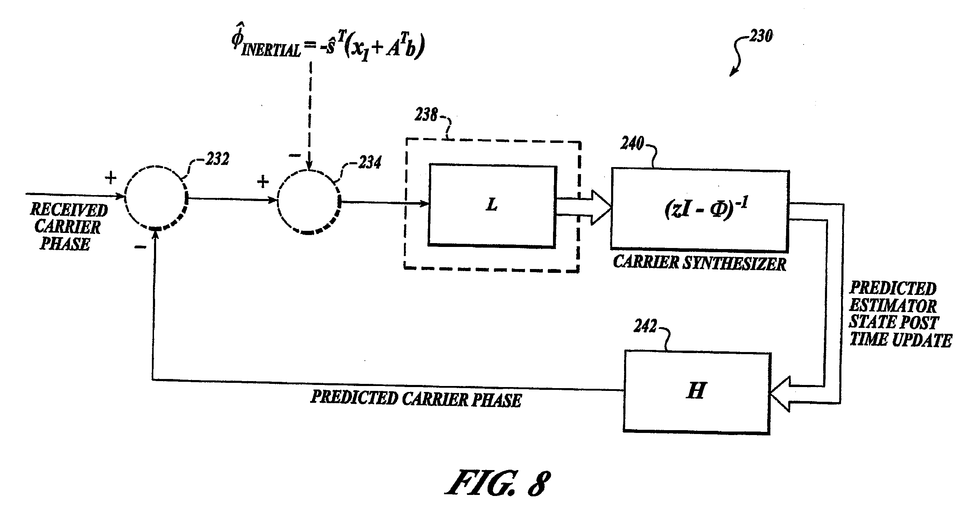

The resulting carrier phase tracking error is fed into the estimator 250 shown in FIGURE 8. This general-purpose estimator 250 is capable of estimating the carrier phase and any number of its time derivatives upon receipt of the latest phase tracking error measurement, $\Delta\varphi$. At the onset, the uncorrected received carrier phase is fed to a carrier synchronization node 232 capable of adjusting the phase of the incoming carrier according to a phase correction signal 242.

In an example, a third order tracking loop is implemented-mostly to take into account satellite orbital motion. Therefore, there are three states, $\varphi$, to the tracking loop estimator/synthesizer: phase, phase velocity, and phase acceleration. The following matrix dynamic model, $\Phi$, is employed to model the carrier phase synthesizer in its progress from the *a posteriori* estimate at one epoch to the *a priori* estimate at the next:

$$\begin{bmatrix} \overline{\varphi} \\ \dot{\overline{\varphi}} \\ \ddot{\overline{\varphi}} \end{bmatrix}_{k+1} = \Phi \begin{bmatrix} \hat{\varphi} \\ \dot{\hat{\varphi}} \\ \ddot{\hat{\varphi}} \end{bmatrix}_k = \begin{bmatrix} 1 & T & \frac{1}{2}T^2 \\ 0 & 1 & T \\ 0 & 0 & 1 \end{bmatrix} \begin{bmatrix} \hat{\varphi} \\ \dot{\hat{\varphi}} \\ \ddot{\hat{\varphi}} \end{bmatrix}_k$$

The sole observable, as encoded in the observability matrix H=[1 0 0], is the measured tracking error,

$$\Delta\varphi_k = \varphi_k - \begin{bmatrix} 1 & 0 & 0 \end{bmatrix} \begin{bmatrix} \overline{\varphi}_k \\ \dot{\overline{\varphi}}_k \\ \ddot{\overline{\varphi}}_k \end{bmatrix} = \varphi_k - \overline{\varphi}_k$$

Using optimal estimation theory, at a block 238, an optimal gain, $L$, may be chosen to yield a measurement update equations as follows from the tracking error:

$$\begin{bmatrix} \hat{\varphi} \\ \dot{\hat{\varphi}} \\ \ddot{\hat{\varphi}} \end{bmatrix}_k = \begin{bmatrix} \overline{\varphi} \\ \dot{\overline{\varphi}} \\ \ddot{\overline{\varphi}} \end{bmatrix}_k + \begin{bmatrix} L_1 \\ L_2 \\ L_3 \end{bmatrix} \Delta \varphi_k$$

Each epoch this correction vector is sent to the carrier phase synthesizer 240 to adjust its advance. As a result, a predicted carrier phase 242 is fed to the carrier synchronization node 232 to effectively delay or advance carrier. The end result is an effectively optimal carier phase tracking loop 230. Care must be taken to ensure that the latency from Iridium does not amount to a significant portion of the sample interval, although this is unlikely when the sample interval is longer than a second. If latency is an issue, then it may be advisable to implement a dynamic model that takes into account the delay. Also, in the example, a carrier phase synthesizer 240 effectively provides third order functionality from one integration interval to the next. The reason for this is to cover those cases where the integration interval becomes significant with respect to one second.

At such integration periods, it becomes preferable for an inertial sensor to be corrected to align the received and corrected carrier phase to account for any user motion over the integration interval. At an inertial carrier synchronization node 234, consistent with FIGURE 6, the measured tracking error becomes

$$\Delta \varphi_k = \varphi_k - \begin{bmatrix} 1 & 0 & 0 \end{bmatrix} \begin{bmatrix} \overline{\varphi}_k \\ \dot{\overline{\varphi}}_k \\ \ddot{\overline{\varphi}}_k \end{bmatrix} - \hat{\phi}_{inertial(k)} = \varphi_k - \overline{\varphi}_k - \hat{\phi}_{inertial(k)}$$

where

$$\hat{\phi}_{inertial(k)} = -s^T \left( \hat{x}_{inertial(k)} + \hat{A}_k b \right)$$

The phase correction at the inertial carrier synchronization node 234 is the projection of the position of the GPS antenna, as estimated by a tightly coupled inertial unit, into the line of sight to the given GPS satellite.

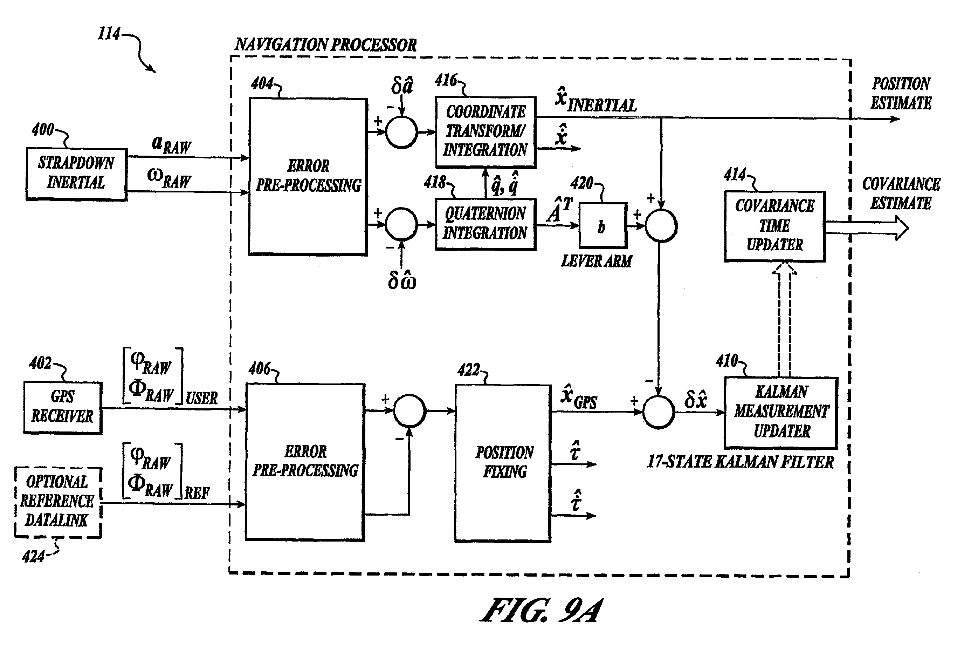

A general model for a suitable inertial reference unit 114 is given in Figure 9a. The sensors for the inertial reference unit are optionally of the strapdown inertial variety rather than a gimbaled unit though either will serve. Therefore, the inertial reference unit includes a strapdown inertial navigation system 400.

Strapdown inertial navigation systems 400 are rigidly fixed to the moving body. Therefore, strapdown inertial reference units move with the body, their gyros experiencing and measuring the same changes in angular rate as the body in motion. The strapdown inertial reference unit 400 contains accelerometers to measure changes in linear rate in terms of the body's fixed axes. The body's fixed axes serve as a moving frame of reference as opposed to the constant inertial frame of reference. The navigation computer uses the gyros' angular information and the accelerometers' linear information to calculate the body's 3D motion with respect to an inertial frame of reference.

A 17-State Kalman Filter estimates position, velocity, accelerometer bias, attitude, gyro bias, clock bias, and clock bias rate410. The inertial error processor block 404 corrects pre-calibrated parameters, including scale factor and alignment errors. Next the corrected measurements pass through the time update blocks performing coordinate transform at a block416, including the addition of the accelerometer and gyro bias states and the integration of the strapdown measurements into position, velocity, and attitude. Quaternion integration occurs at a block 418. The pre-calibrated lever arm, *b*, is used to calculate the estimated position of the user antenna at a block 420.

On the GPS receiver 402 side of the state time update blocks, the error processor block 406 accounts applies corrections such as for atmospheric/ionospheric effects, time tag alignments, and blending code and carrier. If a differential reference station is available, measurements from the GPS receiver are then calibrated against the reference measurements supplied through a datalink 424.

An error processor 406 then applies the scalar receiver clock and clock bias estimates to the raw measurements for position fixing at a block 422. As described in reference to FIGURES 6, 7, and 8 position fixing occurs at a block 422. A covariance time update block 414 propagates the state covariance estimate. In a conventional tightly coupled inertial, the measurement update is derived from the difference between the GPS position estimate and the inertial position estimate.

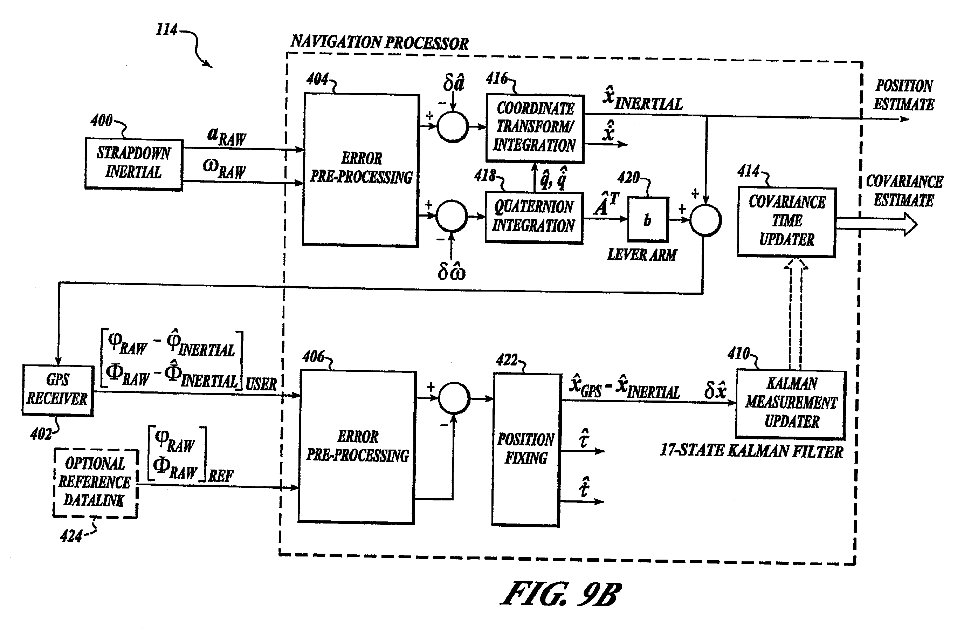

FIGURE 9b shows an ultra-tightly coupled inertial unit example. Unlike the example portrayed in FIGURE 9a, the difference between GPS and the inertial position is taken in the receiver at the tracking loop level, as shown in FIGURES 6 and 8. The inertial position and attitude estimates are routed into the receiver tracking loops. The time update difference is mathematically identical to that of FIGURE 9a except that the receiver-tracking loop is now able to withstand significant disturbances during the tracking loop operation under dynamics with an impaired signal.

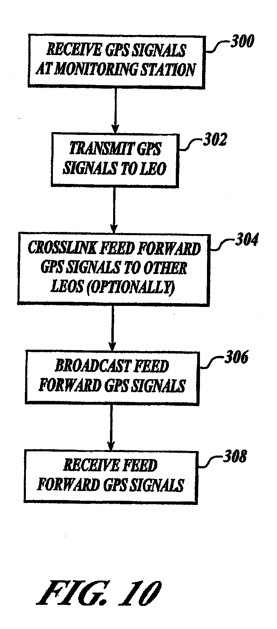

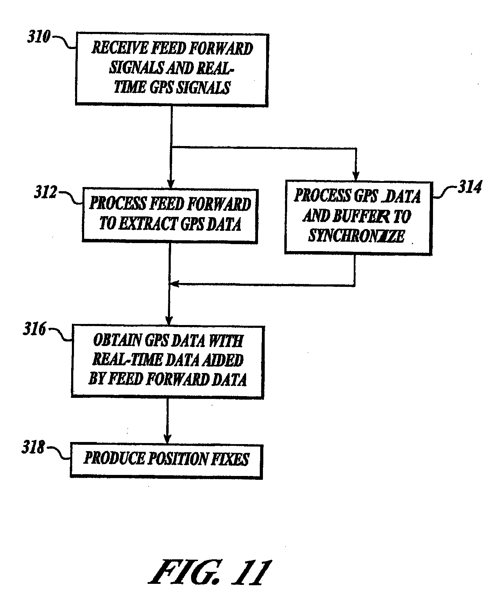

The method for implementing the present example is further described with references to FIGURES 10 and 11. In a first step 300, a monitoring station, such as a ground monitoring and control station 50 (see FIGURE 3) receives GPS signals from those GPS satellites in its field of view. The monitoring station modulates those signals in accordance with the Iridium satellite specification and transmits the received and modulated GPS data to an Iridium satellite in a second step 302. It should be understood that other LEO satellites other than Iridium may be used. Indeed, while LEO satellites are preferred, any broad-footprint data channel will enable the communication link to supply the modulated GPS data.

Once received by an initial Iridium satellite, at a next step 304 the GPS feed-forward data is cross-linked to other Iridium satellites. Any number of cross-linkings of the feed forward data may occur, including no cross-links at all. Ultimately, the feed forward data is broadcast toward the earth 306 for receipt by any number of users, who receive the feed forward data at a final step 308.

With reference to FIGURE 11, the user receives real time GPS signals and feed forward GPS data via the Iridium satellite, at step 310. The user receiver processes both data streams, extracting the feed forward GPS data at a step 312 and, generally in parallel, processing the real time GPS data and buffering it at a step 314 in order to synchronize it with the feed forward data. The feed forward data is then used to supplement the real time data 316, enabling the system to obtain and use accurate GPS data at the user even under jamming or interference conditions. Finally, the receiver produces position fixes 318 from the processed GPS data, optionally aided by an inertial reference unit.

In the preferred embodiment, by way of overview, a method for estimating a precise position of a user device from signals from a low earth orbit (LEO) satellite includes receiving at least one carrier signal at a user device, each carrier signal being transmitted by a distinct LEO satellite. The user device processes the carrier signal to obtain a first carrier phase information. The user device recalls an inertial position fix derived at an inertial reference unit. The user device derives a position of the user device based on the inertial position fix and the first carrier phase information.

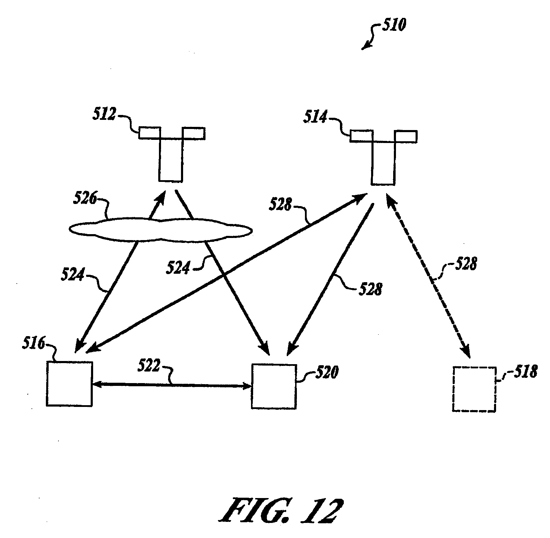

FIGURE 12 illustrates a preferred system in which Indium (or other LEO) satellites 512, 514 are used to provide ranging systems to a user in conjunction with one or more reference stations 516, 518. One of the advantages of using Iridium is that it is able to produce a signal that is much stronger than that produced by GPS satellites. Depending on circumstances, the Iridium satellite can be configured to provide users with approximately 20dB to 40dB or more received power than GPS.

Positioning using a single ranging source in a three-dimensional dynamic environment with Iridium differs significantly from previous positioning systems in that single ranging sources have been limited to two-dimensioned resolution on an idealized surface. With the U.S Navy Navigation Satellite System known as TRANSIT, for example, the user was only able to make quasi-static, two-dimensional measurements that were limited in accuracy. Normally, a minimum of four operational TRANSIT satellites were needed to provide the required frequency of precise navigation fixes.

GPS now provides at least four ranging sources simultaneously in order to enable instantaneous, three-dimensional positioning. However, GPS has a low-power signal that limits operations indoors or in conditions of heavy jamming. A fundamental advantage of the inventive system is that it simultaneously addresses the limitations of its predecessors, providing a dynamic, three-dimensional, accurate position fixes-even indoors or in the presence of jamming. Augmented positioning using Iridium should be able to achieve suitable performance limited principally by the effects of ambient multipath.

A ground support infrastructure is present to provide differential reference measurements. In a presently preferred embodiment, a reference station 516 receives signals from satellites 512 and 514 using reference equipment. Such reference equipment can be functionally identical to a user equipment 520 differing only in that the local position of a receiving antenna is precisely know by survey or other conventional means including GPS positioning.

Differential reference measurement involves the cooperation of at least two receivers, the reference station 516, and the user equipment 520. The cooperation of the at least two receivers, relies upon a signal 524 received at both the reference station 516 and the user equipment 520 are degraded by virtually the same errors. The cooperation is possible on earth when the signals pass through virtually the same slice of atmosphere containing the same obstructions to signals 526. To occur on the surface of the earth, the user equipment 520 and the reference station 516, generally, can be separated by fewer than approximately a thousand kilometers. Where such geometry is present, the signal 524 that reach both of the user equipment 520 and the reference station 516 will have traveled through the same obstacles 526 or will be augmented by the same pattern of jamming.

The reference station 516 provides real-time measurements of the Iridium clock. A data message 522, which, in the presently preferred embodiment, is transmitted over Iridium from the reference station 516 to the user receiver 520, provides a real-time range correction to each measurement to account for both Iridium clock errors and atmospheric effects including obstacles 526 or jamming. Since the reference station 516 has no way of knowing which of the many available satellites the user receiver 520 might be using to calculate its position, the reference receiver 516 quickly runs through all the visible satellites, such as satellite 514, and then computes the error attendant to its signal 528. The corrections necessary to bring the calculated result into line with the known local position of the reference station are then transmitted on any suitable band with adequate confidence in the jamming environment to the user equipment in association with time references to establish near real time correction. In general, navigation performance degrades as separation between user and reference station gets greater due to attendant differences in obstacles 526 or jamming the signal 524 experiences.

Where a second reference station 518 is suitably close, the second reference station 518 can perform the same calculations on the signal 528 as the first reference station 516 yielding a second correction factor from, for instance, the satellite 514, allowing the user equipment to achieve greater precision by averaging or other suitable means of harmonizing the error calculation.

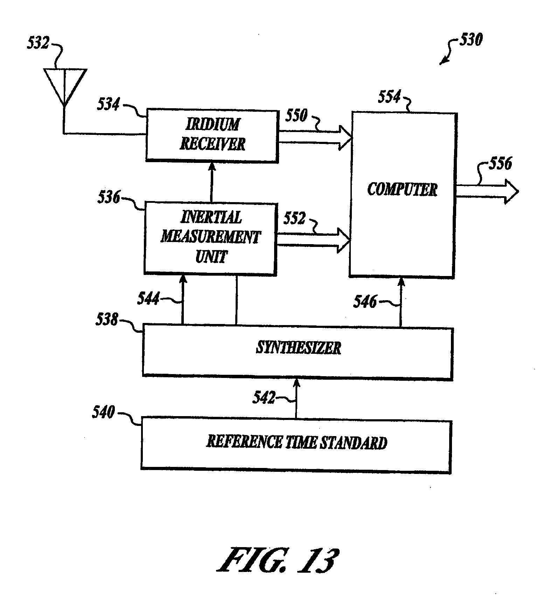

Referring to FIGURE 13, a block diagram for a presently preferred system architecture for a positioning system 530 uses Iridium or other LEO satellites. Each component of the positioning system 530 is driven from the same master clock-a precise time standard 540. A synthesizer 538 creates each of the requisite coherent sine wave and clock signals for each component based upon a clock signal fed to the synthesizer 538 from the precise time standard 540 through a data bus 542.

An antenna 532 is configured to receive transmissions from the Iridium or other LEO satellites as the presently preferred embodiment is configured and is optimized for L band reception. An Iridium receiver 534 receives a raw signal received at the antenna 532 and compares it with the signal generated by the synthesizer 538 and presented to the receiver 534 at a data bus 548. By comparing the signal at the data bus 548 with the transmission received at the antenna 532, the Iridium receiver 534 presents data sufficient to compute a position solution.

An augmented position solution is calculated using an inertial measurement unit 536 receiving a clock signal from the synthesizer 538. Measuring acceleration with the inertial measurement unit 536 in the presently preferred embodiment is accomplished by accelerometers oriented in three orthogonal axes and measuring angular rate about each such axis to compute attitude accurately relative to a vertical axis accomplish accurate attitude sensing. Attitude and other parameters or orientation and motion of the user are derived from the data produced by the accelerometers and rate sensors within the common assembly. In the presently preferred embodiment, the accelerometers are MEMS inertial sensors.

Measuring acceleration with the inertial measurement unit 536 in the presently preferred embodiment augments the system to provide a system that anticipates the next position of the user. Optionally, the position solutions derived by use of the inertial measurement unit 536 may be harmonized with earlier solutions to gain a self-testing ability and to reduce a radius of error in the calculation of the position with the inertial measurement unit 536.

Three-dimensional positioning and filtering using Iridium operates over time scales of about 10 minutes-much less than the 84-minute Schuler period. The Schuler period is the period for a simple undamped pendulum with a length equivalent to the radius of the earth and has been used to correct traditional inertial navigation equipment for the curved movement of a spot on the surface of the earth. Therefore, the inertial unit needs to be capable of providing relative position measurements whose accuracy is significantly better than the filtered range measurement accuracy of the Iridium signal.

With MEMS inertial sensors of sufficient performance, degradation due to the ambient multipath of an indoor environment will dominate the overall system-level accuracy. The total system accuracy will start out in the 4-meter range representing one sigma in standard deviation. Advanced signal processing techniques applied to the Iridium signal significantly reduce indoor multipath error. In outdoor applications with an unobstructed view of the sky, the accuracy will be considerably better-limited mostly by the performance of the inertial reference unit.

In a presently preferred embodiment of the invention, the inventive method and apparatus creates a Secure Iridium Broadcast Signal. Although the Iridium signal is technically a TDMA signal, the superposition of several sub-bands together to formulate a high-powered signal to appear more like a secure CDMA signal. With such a formulation, a navigation user knows the code in advance to be able to make use of it. If the pulse patterns that make up the secure Iridium Broadcast Signal are programmed correctly, the high-power signal would appear like the secure Y-code signal of GPS or its equivalent for processing.

The systems architecture for the indoor case driven by multipath imposes an implicit requirement on the total position bias of about 1 meter after 10 minutes of coasting. The limiting inertial parameter is likely to come from the gyro-rate bias stability or angle random-walk error. A higher performance inertial system is required if the system is to be used outdoors for high-accuracy and integrity navigation.

The computer 554 serves to tie all the Iridium ranging measurements together especially when there is only a single ranging source in view at any given time. "High accuracy" means position errors at the centimeter level. "High integrity" is a safety related term that means that there is enough redundant information present in the form of excess satellite ranging measurements to determine if there is an error in the positioning system. Such capability can be used to alert an operator of the system when that system should not be used for navigation. High performance navigation employs the carrier phase of the LEO satellite to attain raw range measurements precise to the centimeter level.

Because the system will often be measuring only one ranging source at a time, it is desirable that a precise frequency standard be used. Two types of frequency standards are available for this purpose: an ovenized quartz crystal oscillator and an atomic rubidium frequency standard. An ovenized quartz crystal as long as the Allan variance at 600 seconds (10 minutes) does not exceed $10^{-11}$. This corresponds to about 2 meter of position error over the Iridium pass-significantly less than the multipath error on the Iridium signal. If additional accuracy is needed, a compact, ruggedized rubidium standard should be used. The corresponding Allan variance is $10^{-13}$, corresponding to a position error of about 2 cm over the 10-minute interval.

Raw position solutions from the Iridium receiver 534 through a data bus 550 and acceleration measurements from the inertial measurement unit 536 through a data bus 552 are fed into a computer 554 which executes a Kalman filter to process the measurements into final solutions. The Kalman filter is a set of mathematical equations that provides an efficient computational (recursive) solution of the least-squares method. The filter is very powerful in several aspects: it supports estimations of past, present, and even future states, and it can do so even when the precise nature of the modeled system is unknown.

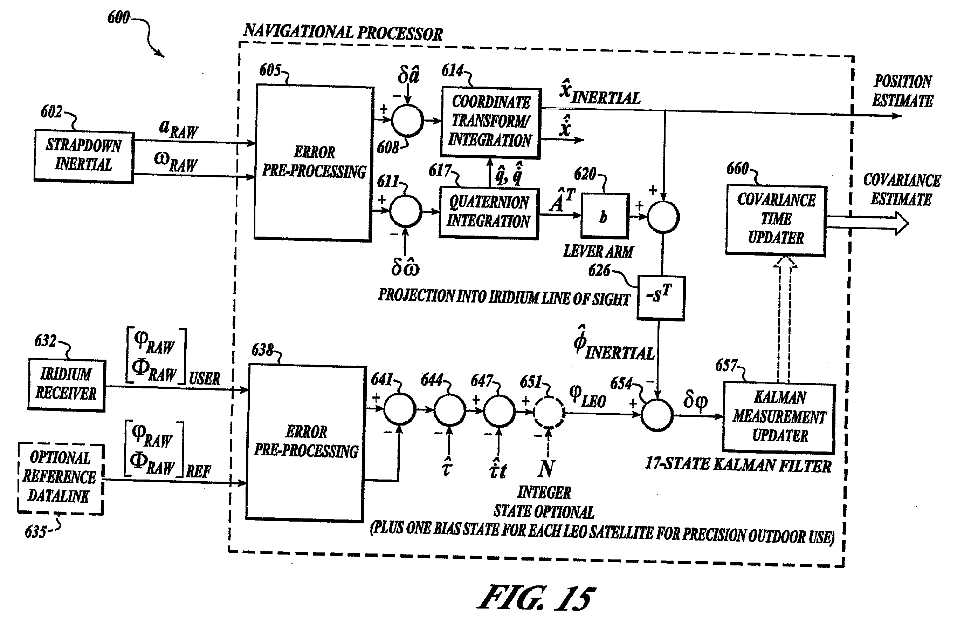

The Kalman filter estimates a process by using a form of feedback control: the filter estimates the process state at some time and then obtains feedback in the form of (noisy) measurements. As such, the equations for the Kalman filter fall into two groups: time update equations and measurement update equations. The time update equations are responsible for projecting forward (in time) the current state and error covariance estimates to obtain the *a priori* estimates for the next time step. The measurement update equations are responsible for the feedback-i.e. for incorporating a new measurement into the *a priori* estimate to obtain an improved *a posteriori* estimate. Since raw position solutions from the Iridium receiver 534 through a data bus 550 and acceleration measurements from the inertial measurement unit 536 through a data bus 552 that are fed into the computer 554 are measurements of the same phenomenon, i.e. movement in space, the measurements are related in the system modeled by the Kalman filter 657 (FIGURE 15).

Depending on the circumstances, not all states (such as yaw attitude) will necessarily be observable at all times. However, because of the orbit geometry of Iridium, the system design ensures that the position component of output will effectively always be observable to within the accuracy of the Iridium ranging measurements.

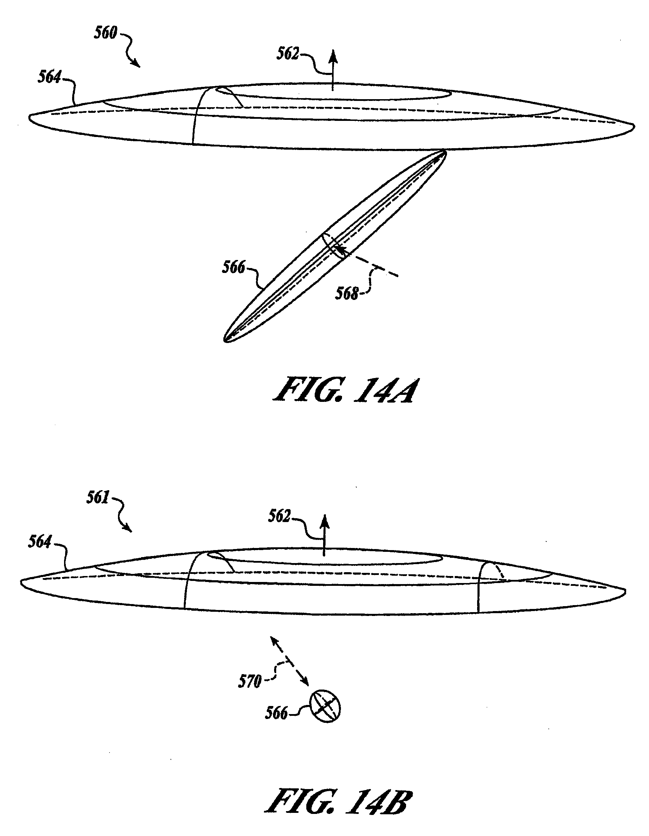

There are two fundamental modes of operation of this invention. The first is based on code phase measurements. Inside of a building, there are many sources of multipath, so using the carrier is not especially feasible. However, LEO satellites provide an abundance of geometry, as shown in FIGURES 14a and 14b, along with significantly higher broadcast power that is useful for penetrating physical barriers. The code ranging measurements can be combined using this geometry to solve for reasonably accurate position, using the inertial navigation unit to bridge measurements made at different times.

The second mode of operation is based on carrier phase measurements. If carrier phase measurements are made outdoors, it is possible to obtain a clean line of sight to the LEO satellites, and therefore, achieve centimeter-level positioning accuracy. The same abundance of geometry, as shown in FIGURES 14a and 14b, enables these precision measurements to be combined into high accuracy and high integrity position solutions, again using the inertial navigation unit to bridge measurements made at different times.

FIGURES 14a and 14b show a typical geometry pass from the standpoint of the user. The Iridium satellites fly in an arc over an interval of several minutes. Multipath will generally be the largest error source. The Iridium carrier phase can be used to drive the ranging error to be arbitrarily small-potentially to centimeter level-when the user has a clear view of the sky. Unfortunately, raw ranging errors will tend to increase to roughly 20-30m working indoors. Because the Iridium satellite spans a large-angle arc in the sky, it should be possible to take advantage of spatial diversity to average down much of this indoor multipath error. By analogy with experimental GPS performance, it is possible to predict what Iridium performance is likely to be by scaling the parameters. The correlation time between Iridium measurements is estimated to be about 10 seconds, meaning that over a 10-minute pass, the receiver can gather roughly 60 "independent" measurements. Therefore, the ranging accuracy may perhaps be improved to roughly 4 meters (dividing the raw ranging accuracy by the square root of 60).

As shown in FIGURE 14a, a cold start initialization 560 uses a trajectory of the first Iridium satellite pass to define a local section of the Iridium orbit sphere 564 having a zenith 562 relative to the position of the user 568. Inertial navigation by the inertial measurement unit 536 yields a positional covariance after the first pass 566 as shown relative the position of the user 568. The rapidly changing angle of the orbit of the LEO satellite in the LEO satellite orbit sphere 564 allows for a rapid convergence of the position estimate allowable by means of the LEO satellite in its orbit sphere 564.

The system structure resembles a tightly coupled GPS-Inertial unit. However, as shown in FIGURE 15, the system 600 is intended to process as few as a single range measurement at a time using a Kalman filter 657. For dynamic applications, a MEMS Inertial Reference Unit (IRU) 602 is coupled to the system and subjected to error preprocessing in the error preprocessing unit 605. In more demanding applications, an inertial-grade IRU may be desirable.

A general model for a suitable IRU 602 includes a strapdown inertial navigation system. Strapdown inertial navigation systems are rigidly fixed to the moving body. Therefore, strapdown inertial reference units move with the body, their gyros experiencing and measuring the same changes in angular rate as the body in motion. The strapdown inertial reference unit contains accelerometers to measure changes in linear rate in terms of the body's fixed axes. The body's fixed axes serve as a moving frame of reference as opposed to the constant inertial frame of reference. The navigation computer uses the gyros' angular information and the accelerometers' linear information to calculate the body's 3D motion with respect to an inertial frame of reference.

The IRU 602 senses inertial acceleration which it outputs as rotational acceleration. The rotational acceleration vector information is fed into an error preprocessor 605. The inertial error preprocessor 605 corrects pre-calibrated parameters, including scale factor and alignment errors. Next, the corrected measurements pass through the time update blocks 608 and 611, including the addition of the accelerometer and gyro bias states and the integration of the strapdown IRU 602 measurements into position, velocity, and attitude vectors.

At an in-phase coordinate processor 614 and a quatrature coordinate processor 617, a vector translation, $x_l$, and attitude motion, represented by the 3 x 3 attitude rotation matrix A, of the user platform. With prior knowledge of the antenna mounting lever arm b 620, with respect to the body frame of the user platform, it is possible to use the inertial signal output from the in-phase coordinate processor 614 and the quatrature coordinate processor 617 to project the antenna motion into the line of sight of the satellite, $\hat{s}$ at a processor 626. The output of the processor 626 is a complex, real-time phase correction. The phase correction is to subtract out short-term user motion and enable long integration times on a LEO signal, when such a LEO signal is available.

On the LEO receiver side of a LEO (in the case of the presently preferred embodiment, an IRIDIUM) receiver 632 receives a carrier signal from the LEO satellite. In an presently preferred embodiment, a second carrier signal received at a reference ground-station in proximity to the user device is also received in association with the precise position of the ground-station position at an optional datalink 635. The second carrier signal insures a rapid integration of the carrier signal from the LEO satellite and further enables operation of an LEO error preprocessor 638.

As with the inertial side, the LEO error preprocessor 638 corrects pre-calibrated parameters, including scale factor and alignment errors. Additionally, the LEO error preprocessor 638 corrects propagation induces errors based upon the information received at the optional datalink 635. The error processor 638 applies corrections such as for atmospheric/ionospheric effects, time tag alignments, and blending code and carrier.

Bias state time update blocks 641, 644, 647, and 651 apply the scalar receiver clock and clock bias estimates to the raw measurements. A further bias block 654, uses the output of the processor 626 to subtract out short-term user motion and enable long integration times on a LEO signal, when such a LEO signal is available. The corrected LEO position is ready for feeding into the Kalman filter 657. In the presently preferred embodiment the computer 554 executes a 17-state Kalman filter estimator to solve for:

> Position (3 axes)
> Velocity (3 axes)
> Accelerometer bias (3 axes)
> Attitude (3 axes)
> Gyro bias (3 axes)
> Clock bias
> Clock drift

A covariance time updater 660 propagates a state covariance estimate. The estimated inertial position, projected into the line of sight of each given LEO satellite by the processor 626, is compared with the measured range to the LEO satellite to form the measurement update to the Kalman filter 657.

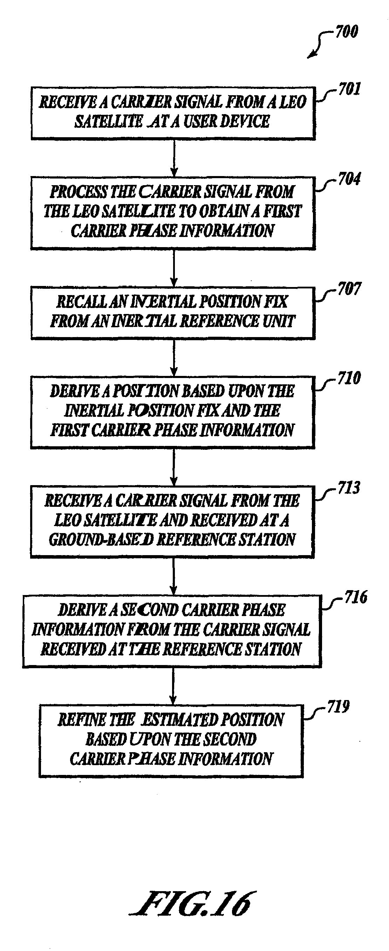

Referring to FIGURE 16, a method 700 is provided for estimating a precise position of a user device in a LEO satellite-based navigation system. At a block 701, a user device receives transmitted carrier signals from a set of LEO satellites. At a block 704, the user device processed the carrier signals to obtain user carrier phase information including geometrically diverse user carrier phase information from the set of LEO satellites. At a block 707, the user device recalls an inertial position fix. At a block 710, the precise position of the user device based on the inertial position fix and the user carrier phase information. At a block 713, the user device derives user carrier information from the set of LEO satellites based upon the inertial position to resolve integer cycle ambiguities in the user carrier phase information.

In a preferred embodiment, the method 700 includes tracking the carrier signals at a reference station to obtain reference carrier phase information. The reference carrier phase information includes geometrically diverse reference carrier phase information from the set of LEO satellites. The method 700 may also include deriving a second carrier phase information from the carrier signal received at the reference station at a block 716. At a block 719, the user device refines the accuracy of the position calculation based upon the reference carrier phase information. In a preferred embodiment, the method further comprises estimating an approximate user position and clock offset using code phase signals received from a set of navigational satellites.

Preferably, differential code phase techniques are used to improve the accuracy of the initial estimate. The preferred embodiment of the method also includes additional advantageous techniques such as: compensating for frequency dependent phase delay differences between carrier signals in user and reference receiver circuits, reading navigation carrier information and LEO carrier information within a predetermined time interval selected in dependence upon an expected motion of the user receiver and the LEO signal sources, calibrating LEO oscillator instabilities using navigation satellite information, compensating for phase disturbances resulting from a bent pipe LEO communication architecture, compensating for oscillator instabilities in the user and reference receivers, predicting present reference carrier phase information based on past reference carrier phase information, and monitoring the integrity of the position calculation.

Depending on the circumstances, not all states (such as yaw attitude) will necessarily be observable at all times. Because of the orbit geometry of Iridium-specifically the rapid large-angle overhead motion-the system ensures that, upon convergence, the position component of output will effectively always be observable to within the accuracy of the Iridium ranging measurements.

While embodiments of the invention have been illustrated and described, as noted above, many changes can be made without departing from the scope of the invention. For instance, if high-performance carrier ranging is to be carried out, an optional float bias state is added, one for each LEO satellite, as shown in FIGURE 15, to account for the integer cycle ambiguity. Also, although LEO satellites have been described above, any broad-footprint, over-the-horizon data channel is a candidate as well. Accordingly, the scope of the invention is not limited by the disclosure of the above-described embodiments. Instead, the invention should be determined entirely by reference to the claims.

**Claims**

1.  A method for estimating a precise position of a user device (520) from signals from a low earth orbit, LEO, satellite (512, 514), the method comprising:

    receiving at least one carrier signal at a user device, each carrier signal being transmitted by a distinct LEO satellite;
    processing the carrier signals to obtain a first carrier phase information;

    said method **characterised by** further comprising:

    recalling an inertial position fix derived at an inertial reference unit (536) at said user device; and
    deriving a position of the user device based on the inertial position fix and the first carrier phase information.

2.  The method of Claim 1, wherein deriving a position of the user device further includes refining first carrier phase information to resolve integer cycle ambiguities based upon the inertial position.

3.  The method of Claim 1, wherein deriving a position of the user device further includes:

    processing the carrier signals received at a reference station to obtain a second reference carrier phase information.

4.  The method of Claim 3, wherein deriving a position of the user device further includes:

    refining the position of the user device is further based upon the second reference carrier phase information.

5.  The method of Claim 1, further comprising:

    estimating an approximate user position and clock offset using code phase signals received from a set of navigational satellites.

6.  The method of Claim 5, wherein the inertial position fix is refined based upon said approximate user position.

7.  The method of Claim 1, wherein the inertial reference unit is a MEMS inertial reference unit.

8.  The method of Claim 1, wherein the inertial position fix is refined based upon the position of the user device.

9.  A user device (520) for estimating a precise position of the user device from signals from a low earth orbit, LEO

satellite (512, 514), the device comprising:

a receiver (534) configured to receive at least one carrier signal at the user device, each carrier signal being transmitted by a distinct LEO satellite;
a signal processor configured for processing the carrier signals to obtain a first carrier phase information;

said device **characterised by** further comprising:

an inertial reference unit (536) configured for recalling an inertial position fix derived at said inertial reference unit; and
a processor (534) configured to derive a position of the user device based on the inertial position fix and the first carrier phase information.

10. A computer software program stored on a computer readable medium, the computer program, when executed by a computer, configured to estimate a precise position of a user device based on signals from a low earth orbit, LEO, satellite, the computer software program comprising:

a first software component configured to receive at least one carrier signal, each carrier signal being transmitted by a distinct LEO satellite;
a second software component configured to process the carrier signals to obtain a first carrier phase information;

said computer software program being **characterised by** further comprising:

a third software component configured to recall an inertial position fix derived at an inertial reference unit at said user device; and
a fourth software component configured to derive a position of the user device based on the inertial position fix and the first carrier phase information.

11. An apparatus for estimating a precise position of a user device (520) from signals from a low earth orbit, LEO, satellite (512, 514), the apparatus comprising:

means for receiving at least one carrier signal at a user device, each carrier signal being transmitted by a distinct LEO satellite;
means for processing the carrier signals to obtain a first carrier phase information; said apparatus **characterised by** further comprising:
means for recalling an inertial position fix derived at an inertial reference unit at said user device; and
means for deriving a position of the user device based on the inertial position fix and the first carrier phase information.

**Patentansprüche**

1. Verfahren zur Abschätzung der genauen Position eines Benutzergeräts (520) aus Signalen eines Satelliten (512, 514) in einer erdnahen Umlaufbahn (LEO, von Low Earth Orbit), wobei das Verfahren umfasst:

Empfangen von zumindest einem Trägersignal an einem Benutzergerät, wobei jedes Trägersignal von einem bestimmten LEO-Satelliten ausgesendet wird,
Verarbeiten der Trägersignale, um eine erste Trägerphaseninformation zu erhalten,
wobei das Verfahren **dadurch gekennzeichnet ist, dass** es ferner umfasst:

Abrufen einer Trägheitsstandortbestimmung, die von einer Trägheitsmesseinheit (536) an dem Benutzergerät stammt, und
Ableiten einer Position des Benutzergeräts auf Basis der Trägheitsstandortbestimmung und der ersten Trägerphaseninformation.

2. Verfahren nach Anspruch 1, worin ein Ableiten einer Position des Benutzergeräts ferner eine Aufbereitung der ersten Trägerphaseninformation, um auf Basis der inertialen Position ganzzahlige Zyklusmehrdeutigkeiten aufzulösen.

3. Verfahren nach Anspruch 1, worin das Ableiten einer Position des Benutzergeräts ferner umfasst:

Verarbeiten der an einer Referenzstation erhaltenen Trägersignale, um eine zweite Referenzträgerphaseninformation zu erhalten.

4. Verfahren nach Anspruch 3, worin das Ableiten einer Position des Benutzergeräts ferner umfasst, dass das Aufbereiten der Position des Benutzergeräts ferner auf der zweiten Referenzträgerphaseninformation beruht.

5. Verfahren nach Anspruch 1, das ferner umfasst:

Abschätzen einer ungefähren Benutzerposition und eines Taktversatzes unter Verwendung von Codephasensignalen, die von einem Satz von Navigationssatelliten empfangen wurden.

6. Verfahren nach Anspruch 5, worin die Trägheitsstandortbestimmung auf Basis der ungefähren Benutzerposition aufbereitet wird.

7. Verfahren nach Anspruch 1, worin die Trägheitsmesseinheit eine MEMS-Trägheitsmesseinheit ist.

8. Verfahren nach Anspruch 1, worin die Trägheitsstandortbestimmung auf Basis der Position des Benutzergeräts aufbereitet wird.

9. Benutzergerät (520) zur Abschätzung der genauen Position des Benutzergeräts aus Signalen eines Satelliten (512, 514) in einer erdnahen Umlaufbahn (LEO), wobei das Gerät aufweist:

einen Empfänger (534), der dazu ausgebildet ist an dem Benutzergerät zumindest ein Trägersignal zu empfangen, wobei jedes Trägersignal von einem bestimmten LEO-Satelliten ausgesandt wird,
einen Signalprozessor, der dazu ausgebildet ist, die Trägersignale zu verarbeiten, um eine erste Trägerphaseninformation zu erhalten,
wobei das Gerät **dadurch gekennzeichnet ist, dass** es ferner aufweist:

eine Trägheitsmesseinheit (536), die zum Abrufen einer Trägheitsstandortbestimmung ausgebildet ist, die von der Trägheitsmesseinheit (536) stammt, und
einen Prozessor (534), der zum Ableiten einer Position des Benutzergeräts auf Basis der Trägheitsstandortbestimmung und der ersten Trägerphaseninformation ausgebildet ist.

10. Computersoftwareprogramm, das auf einem computerlesbaren Medium gespeichert ist, wobei das Computerprogramm dazu ausgebildet ist, bei Ausführung durch einen Computer die genaue Position eines Benutzergerätes auf Basis von Signalen eines Satelliten in einer erdnahen Umlaufbahn (LEO) abzuschätzen, wobei das Computersoftwareprogramm aufweist:

eine erste Softwarekomponente, die zum Empfangen von zumindest einem Trägersignal ausgebildet ist, wobei jedes Trägersignal von einem bestimmten LEO-Satelliten ausgesandt wird,
eine zweite Softwarekomponente, die dazu ausgebildet ist, die Trägersignale zu verarbeiten, um eine erste Trägerphaseninformation zu erhalten,
wobei das Computersoftwareprogramm **dadurch gekennzeichnet ist, dass** es ferner aufweist:

eine dritte Softwarekomponente, die zum Abrufen einer Trägheitsstandortbestimmung ausgebildet ist, die von einer Trägheitsmesseinheit (536) an dem Benutzergerät stammt, und
eine vierte Softwarekomponente, die zum Ableiten einer Position des Benutzergeräts auf Basis der Trägheitsstandortbestimmung und der ersten Trägerphaseninformation ausgebildet ist.

11. Vorrichtung zur Abschätzung der genauen Position eines Benutzergeräts (520) aus Signalen eines Satelliten (512, 514) in einer erdnahen Umlaufbahn (LEO), wobei die Vorrichtung aufweist:

eine Einrichtung, um an einem Benutzergerät zumindest ein Trägersignal zu empfangen, wobei jedes Trägersignal von einem bestimmten LEO-Satelliten ausgesandt wird,

eine Einrichtung, um die Trägersignale zum Erhalt einer ersten Trägerphaseninformation zu verarbeiten, wobei die Vorrichtung **dadurch gekennzeichnet ist, dass** sie ferner aufweist:

eine Einrichtung, um eine Trägheitsstandortbestimmung abzurufen, die von einer Trägheitsmesseinheit an dem Benutzergerät stammt, und
eine Einrichtung, um eine Position des Benutzergeräts auf Basis der Trägheitsstandortbestimmung und der ersten Trägerphaseninformation abzuleiten.

## Revendications

1. Procédé pour estimer une position précise d'un dispositif utilisateur (520) à partir de signaux provenant d'un satellite (512, 514) en orbite terrestre basse (LEO), le procédé comprenant les étapes consistant à :

   recevoir au moins un signal de porteuse au niveau d'un dispositif utilisateur, chaque signal de porteuse étant transmis par un satellite LEO distinct ;
   traiter les signaux de porteuse afin d'obtenir une première information de phase de porteuse ;
   ledit procédé étant **caractérisé en ce qu'**il comporte les étapes complémentaires consistant à
   rappeler un relevé de position inertielle déduit au niveau d'une unité de référence inertielle (536) située au niveau dudit dispositif utilisateur ; et
   déduire une position du dispositif utilisateur sur la base du relevé de position inertielle et de la première information de phase de porteuse.

2. Procédé selon la revendication 1, dans lequel l'étape de déduction d'une position du dispositif d'utilisateur comprend en outre un affinage de la première information de phase de la porteuse pour résoudre les ambiguïtés d'un cycle entier sur la base de la position inertielle.

3. Procédé selon la revendication 1, dans lequel la déduction d'une position du dispositif utilisateur comprend en outre :

   le traitement des signaux de porteuse reçus au niveau d'un poste de référence pour obtenir une deuxième information de phase de porteuse de référence.

4. Procédé selon la revendication 3, dans lequel la déduction d'une position du dispositif utilisateur comprend en outre :

   l'affinage de la position du dispositif d'utilisateur est en outre basé sur la seconde information de phase de porteuse de référence.

5. Procédé selon la revendication 1, comprenant en outre :

   l'estimation d'une position d'utilisateur approximative et d'un décalage d'horloge en utilisant des signaux de phase de code reçus à partir d'un ensemble de satellites de navigation.

6. Procédé selon la revendication 5, dans lequel le relevé de position inertielle est affiné en fonction de la position approximative de l'utilisateur.

7. Procédé selon la revendication 1, dans lequel l'unité de référence inertielle est une unité de référence inertielle MEMS.

8. Procédé selon la revendication 1, dans lequel le relevé de position inertielle est affiné sur la base de la position du dispositif utilisateur.

9. Dispositif utilisateur (520) pour estimer une position précise du dispositif utilisateur à partir de signaux provenant d'un satellite (512, 514) en orbite terrestre basse (LEO), le dispositif comprenant :

   un récepteur (534) configuré pour recevoir au moins un signal de porteuse au niveau du dispositif utilisateur, chaque signal de porteuse étant transmis par un satellite LEO distinct ;
   un processeur de signaux configuré pour traiter les signaux de porteuse afin d'obtenir une première information de phase de porteuse ;
   ledit dispositif étant **caractérisé en ce qu'**il comporte en outre :

une unité de référence inertielle (536) configurée pour rappeler un relevé de position inertielle déduit au niveau de ladite unité de référence inertielle ; et

un processeur (534) configuré pour déduire une position du dispositif utilisateur sur la base du relevé de position inertielle et de la première information de phase de porteuse.

**10.** Programme de logiciel informatique mémorisé sur un support pouvant être lu par un ordinateur, le programme informatique, lorsqu'exécuté par un ordinateur, étant configuré pour estimer une position précise d'un dispositif utilisateur à partir de signaux provenant d'un satellite en orbite terrestre basse (LEO), le programme de logiciel informatique comprenant :

un premier composant de logiciel configuré pour recevoir au moins un signal de porteuse, chaque signal de porteuse étant transmis par un satellite LEO distinct ;

un deuxième composant de logiciel configuré pour traiter les signaux de porteuse afin d'obtenir une première information de phase de porteuse ;

ledit programme de logiciel informatique étant **caractérisé en ce qu'**il comporte en outre :

un troisième composant de logiciel configuré pour rappeler un relevé de position inertielle déduit au niveau d'une unité de référence inertielle au niveau dudit dispositif utilisateur ; et

un quatrième composant de logiciel configuré pour déduire une position du dispositif utilisateur sur la base du relevé de position inertielle et de la première information de phase de porteuse.

**11.** Appareil pour estimer une position précise d'un dispositif utilisateur (520) à partir de signaux provenant d'un satellite en orbite terrestre basse (LEO), l'appareil comprenant :

des moyens pour recevoir au moins un signal de porteuse au niveau d'un dispositif utilisateur, chaque signal de porteuse étant transmis par un satellite LEO distinct ;

des moyens pour traiter les signaux de porteuse afin d'obtenir une première information de phase de porteuse ;

ledit appareil étant **caractérisé en ce qu'**il comprend en outre :

des moyens pour rappeler un relevé de position inertielle déduit au niveau d'une unité de référence inertielle au niveau dudit dispositif utilisateur ; et

des moyens pour déduire une position du dispositif utilisateur sur la base du relevé de position inertielle et de la première information de phase de porteuse.

IRIDIUM SATELLITE

GPS SATELLITE

GPS   GPS

GPS

17

16

16

16

10

GPS ANTENNA 12

R. F. INTERFERENCE

14

PASSENGER ELECTRONIC DEVICE
RADIATING IN BAND

18

GPS RECEIVER
IN AVIONICS BAY

CONNEXIONS
PACKAGE

*FIG. 1* (PRIOR ART)

EP 2 698 644 B1

20

21

| FRAME 1 | FRAME 2 | FRAME 3 | FRAME 4 | FRAME 5 | FRAME 6 | FRAME 7 |

. . .

25

$t$ ⟶

26

22

23

| FRAME 1 | FRAME 2 | FRAME 3 | FRAME 4 | FRAME 5 | FRAME 6 | FRAME 7 |

. . .

*FIG. 2*

GPS STATELLITES

30b

30a

30c

30d

GPS RANGING SIGNALS

34b

34c

34a

34d

LEO STATELLITES 40

LEO STATELLITE 40

42 44

GPS DATA FEED FORWARD BROADCAST

GPS DATA FEED FORWARD BROADCAST

36a

46 46

36b

GROUND MONITORING AND CONTROL STATION

USER

GROUND MONITORING AND CONTROL STATION

15

INTERFERENCE OR JAMMING

50a

60

50b

*FIG. 3*

EP 2 698 644 B1

FIG. 4

FIG. 5

FIG. 6

200 202 206 210 212 216 218 220

204 CODE GENERATOR

208 CARRIER SYNTHESIZER

$\Sigma$

114 $e^{j\tilde{s}^T(x_1 + A^T b)}$

214 GPS DATA BIT DECOMMUTATOR

$\Sigma$

COMMANDS / DATA

201

EP 2 698 644 B1

*FIG. 7*

EP 2 698 644 B1

$$\hat{\phi}_{INERTIAL} = -\hat{s}^T(x_1 + A^T b)$$

230

238

240

RECEIVED
CARRIER
PHASE

+ 232

+ 234

− 

L

$(zI - \Phi)^{-1}$

CARRIER SYNTHESIZER

PREDICTED
ESTIMATOR
STATE POST
TIME UPDATE

242

H

PREDICTED CARRIER PHASE

*FIG. 8*

FIG. 9A

NAVIGATION PROCESSOR

STRAPDOWN INERTIAL — 400

GPS RECEIVER — 402

OPTIONAL REFERENCE DATALINK — 424

ERROR PRE-PROCESSING — 404

ERROR PRE-PROCESSING — 406

COORDINATE TRANSFORM/ INTEGRATION — 416

QUATERNION INTEGRATION — 418

LEVER ARM — 420

POSITION FIXING — 422

COVARIANCE TIME UPDATER — 414

KALMAN MEASUREMENT UPDATER — 410

17-STATE KALMAN FILTER

POSITION ESTIMATE

COVARIANCE ESTIMATE

EP 2 698 644 B1

26

FIG. 9B

RECEIVE GPS SIGNALS
AT MONITORING STATION — 300

↓

TRANSMIT GPS
SIGNALS TO LEO — 302

↓

CROSSLINK FEED FORWARD
GPS SIGNALS TO OTHER
LEOS (OPTIONALLY) — 304

↓

BROADCAST FEED
FORWARD GPS SIGNALS — 306

↓

RECEIVE FEED
FORWARD GPS SIGNALS — 308

## FIG. 10

310 — RECEIVE FEED FORWARD
SIGNALS AND REAL-
TIME GPS SIGNALS

312 — PROCESS FEED FORWARD
TO EXTRACT GPS DATA

314 — PROCESS GPS DATA
AND BUFFER TO
SYNCHRONIZE

316 — OBTAIN GPS DATA WITH
REAL-TIME DATA AIDED
BY FEED FORWARD DATA

318 — PRODUCE POSITION FIXES

FIG. 11

*FIG. 12*

FIG. 13

**FIG. 14A**

**FIG. 14B**

*FIG. 15*

_700_

_701_

RECEIVE A CARRIER SIGNAL FROM A LEO
SATELLITE AT A USER DEVICE

_704_

PROCESS THE CARRIER SIGNAL FROM
THE LEO SATELLITE TO OBTAIN A FIRST
CARRIER PHASE INFORMATION

_707_

RECALL AN INERTIAL POSITION FIX
FROM AN INERTIAL REFERENCE UNIT

_710_

DERIVE A POSITION BASED UPON THE
INERTIAL POSITION FIX AND THE
FIRST CARRIER PHASE INFORMATION

_713_

RECEIVE A CARRIER SIGNAL FROM THE
LEO SATELLITE AND RECEIVED AT A
GROUND-BASED REFERENCE STATION

_716_

DERIVE A SECOND CARRIER PHASE
INFORMATION FROM THE CARRIER SIGNAL
RECEIVED AT THE REFERENCE STATION

_719_

REFINE THE ESTIMATED POSITION
BASED UPON THE SECOND
CARRIER PHASE INFORMATION

*FIG.16*

**REFERENCES CITED IN THE DESCRIPTION**

**Patent documents cited in the description**

- US 6133874 A
- US 5664734 A
- US RE37256 E, Cohen
- US 5812961 A, Enge
- US 5944770 A, Enge
- US 6373432 B, Rabinowitz